# EUROPÄISCHE PATENTANMELDUNG

(11) **EP 2 533 149 A1**
(43) Veröffentlichungstag der Anmeldung: **12.12.2012**
(21) Anmeldenummer: 11169054.1
(22) Anmeldetag: 08.06.2011
(51) Int. Cl.: G06F 9/44, G05B 19/418

(54) **Verfahren zum Erstellen von als Automatisierungslösung fungierenden Computerprogrammen**

(71) Anmelder: SIEMENS AKTIENGESELLSCHAFT, 80333 München (DE)
(72) Erfinder: Höfler, Werner, 90542 Eckental (DE); Kiesel, Martin, 91099 Poxdorf (DE); Knappe, Gwendolin, 91054 Erlangen (DE); Schmidt, Uwe, 91054 Erlangen (DE)

(57) **Zusammenfassung**

Die Erfindung betrifft ein Verfahren zum Erstellen von als Automatisierungslösung fungierenden Computerprogrammen (22) unter Verwendung technologischer Vorlagen (30), wobei die technologischen Vorlagen (30) neben Programmcode (32) zumindest auch jeweils zumindest ein Objekt (34) zur Repräsentation insbesondere physikalischer Einheiten eines technischen Prozesses (10) oder zur Repräsentation des technischen Prozesses (10) oder davon umfasster Teilprozesse aufweisen.

## Beschreibung

Die Erfindung betrifft ein Verfahren zum Erstellen eines als Automatisierungslösung fungierenden Computerprogramms oder einer Mehrzahl solcher Programme und dort speziell eine Möglichkeit zur Steigerung der Effizienz durch Wiederverwendung von hier und im Folgenden als Artefakt bezeichneten Bestandteilen von zum Beispiel früheren Automatisierungslösungen.

Eine Wiederverwendung von insbesondere antriebsnahen Automatisierungslösungen und diesbezüglichen Artefakten oder Teilartefakten ist heute nur eingeschränkt möglich. Bekannt sind lediglich Bibliothekskonzepte, mit denen eine Wiederverwendung auf Automatisierungsprogrammebene unterstützt wird. Das Fehlen solcher Wiederverwendungsmöglichkeiten ist auch bisher konsequent, denn neben normalen Programmiervariablen gibt es Ein- und Ausgänge, die grundsätzlich zur Definition von Schnittstellen in Betracht kommen, darüber hinaus gibt es aber keine abstrahierten Automatisierungsschnittstellen, also zum Beispiel abstrahierte Schnittstellen zu Motoren, Antrieben, technologischen Sensoren/Aktoren, wie zum Beispiel Messtaster und Nocken, usw.. Bezogen auf eine gesamte Automatisierungsaufgabe wird damit insgesamt nur ein Teilbereich durch Wiederverwendungsmechanismen unterstützt und zwar nur die Programmierebene teilweise und nicht die Antriebs- und Motorebene und ebenfalls keine abstrahierten antriebsspezifischen Schnittstellen. Darüber hinaus erfolgt eine Bindung an eine jeweilige Antriebsperipherie zum Engineering- oder Compile-Zeitpunkt. Sogenanntes Late Binding zur Laufzeit wird nur eingeschränkt unterstützt.

Indem derzeit kaum Wiederverwendungsmechanismen zur Verfügung stehen, liegt bisher der Schwerpunkt insoweit auf einer Wiederverwendung durch "copy & paste". Dies ist jedoch sehr fehleranfällig und über einen Lebenszyklus der so entstehenden Artefakte der Automatisierungslösung nur schwer bis gar nicht administrierbar. Zudem ist eine solche Art der "Wiederverwendung" trotz der Möglichkeit des Zugriffs auf frühere Arbeiten dennoch sehr zeitaufwendig und damit kostenintensiv.

Eine Aufgabe der Erfindung besteht entsprechend darin, ein Verfahren zum Erstellen von als Automatisierungslösung fungierenden Computerprogrammen anzugeben, das die oben skizzierten Nachteile vermeidet oder zumindest deren Auswirkungen reduziert.

Diese Aufgabe wird erfindungsgemäß mit den Merkmalen des Anspruchs 1 gelöst. Dafür ist bei einem Verfahren zum Erstellen von als Automatisierungslösung fungierenden Computerprogrammen unter Verwendung technologischer Vorlagen, mit einer in Software implementierten Entwicklungsumgebung, vorgesehen, dass die technologischen Vorlagen neben Programmcode und/oder Konfigurations-/Projektierungsdaten zumindest auch jeweils zumindest ein Objekt zur Repräsentation einzelner Aspekte eines technischen Prozesses, nämlich zum Beispiel physikalischer Einheiten des technischen Prozesses, oder zur Repräsentation des technischen Prozesses oder davon umfasster Teilprozesse aufweisen.

Der Vorteil der Erfindung besteht darin, dass der Umfang der Wiederverwendbarkeit von Artefakten für Automatisierungslösungen erheblich ausgeweitet wird. Indem definierte technologische Vorlagen zur Verfügung stehen, ist bereits ein Schritt über eine Wiederverwendung von Teilen älterer Automatisierungslösungen durch "copy & paste" hinaus getan. Einfaches Kopieren und Einfügen erfordert eine genaue Sachkenntnis, wie umfangreich das zu kopierende Fragment sein muss, damit zum Beispiel Definitionen von Variablen nicht verloren gehen. Insofern kann für eine Wiederverwendung von Bestandteilen einer älteren Automatisierungslösung eine Auswahl einer Mehrzahl von Artefakten an unterschiedlichen Positionen der Automatisierungslösung erforderlich sein. Definierte technologische Vorlagen vermeiden bereits dieses Problem, indem sie sämtliche erforderlichen Daten und Programmcodefragmente enthalten. Indem die technologischen Vorlagen neben Programmcode und/oder Konfigurations-/Projektierungsdaten zumindest auch jeweils zumindest ein Objekt zur Repräsentation eines Aspekts des jeweiligen technischen Prozesses, also zum Beispiel ein Objekt zur Repräsentation zumindest einer physikalischen Einheit des jeweiligen technischen Prozesses oder zur Repräsentation des technischen Prozesses oder davon umfasster Teilprozesse, aufweisen, werden auch solche Aspekte und deren Daten für eine Wiederverwendung zugänglich. Beispielhaft sei an dieser Stelle auf die nach dem hier vorgestellten Ansatz jetzt gegebene Möglichkeit verwiesen, in einer technologischen Vorlage Programmcode zur Ansteuerung einer Antriebseinheit, zum Beispiel für eine Produktions- oder Werkzeugmaschine oder dergleichen, mit zumindest einem Objekt zur Modellierung einer Schnittstelle zur kommunikativen Erreichbarkeit der Antriebseinheit und/oder einem Objekt zur Modellierung maschinenbaulicher oder sonstiger technologischer Aspekte der Antriebseinheit (Leistungsklasse, Dimensionen, etc.) für eine spätere Wiederverwendbarkeit zusammenzufassen.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin; sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Wenn bei dem Verfahren zum Erstellen von als Automatisierungslösung fungierenden Computerprogrammen unter Verwendung technologischer Vorlagen in einer technologischen Vorlage einem Objekt eine Schnittstelle zugeordnet ist, ergibt sich eine definierte Zugriffsmöglichkeit auf das jeweilige Objekt. Der Verwender der technologischen Vorlage benötigt damit üblicherweise keine besonderen Detailkenntnisse hinsichtlich der Art und Weise, wie das Objekt eine bestimmte Funktionalität realisiert oder wie in dem Objekt bestimmte Informationen kodiert sind. Statt dessen reicht eine Kenntnis der Schnittstelle aus.

Wenn in einer technologischen Vorlage einem Objekt eine Schnittstelle zugeordnet und diese Schnittstelle typisiert ist, ergibt sich eine implizite Verbesserung der Konsistenz der auf Basis solcher technologischer Vorlagen entstehenden Automatisierungslösung, indem auf Basis der Typisierung der Schnittstellen bei einer Verwendung des jeweiligen Objekts entweder zum Compile-Zeitpunkt oder zur Laufzeit eine Typenprüfung erfolgen kann und insoweit jede Verwendung einer Schnittstelle mit inkompatiblen Typen aufgedeckt wird.

Wenn die technologischen Vorlagen Bezeichner für eine späte Bindung erst zu einem Laufzeit-Zeitpunkt, sogenanntes Late Binding, umfassen, ergibt sich eine zusätzliche Flexibilität bei der Erstellung der Automatisierungslösung. Auf dieser Basis können zum Beispiel auch offene Motorschnittstellen in einer technologischen Vorlage definiert werden, die erst zu einem Verwendungszeitpunkt, also spätestens zur Laufzeit, abgebunden werden. Solche Motorschnittstellen oder Ähnliches können aufgrund der späten Bindung flexibel an etwaige Änderungen der jeweiligen Maschine angepasst werden. Des Weiteren können speziell Motorschnittstellen aufgrund der späten Bindung an die konkrete Motorausprägung flexibel an unterschiedliche Maschinentypen (z.B. "kleine", "mittlere" und "große" Maschine) angepasst werden.

Wenn bei dem Verfahren zum Erstellen von als Automatisierungslösung fungierenden Computerprogrammen unter Verwendung technologischer Vorlagen eine technologische Vorlage Zusatzinformationen für einen Verwender der Vorlage umfasst, erhält dieser unmittelbar Zugriff auf weitere Daten, Handlungsempfehlungen und dergleichen, die ansonsten teilweise mühsam nachgeschlagen oder erarbeitet werden müssen.

Exemplarisch kann dabei auf eine Ausführungsform des Verfahrens verwiesen werden, bei dem eine technologische Vorlage als Zusatzinformation ein Diagnose-Szenario umfasst. Der Entwerfer der technologischen Vorlage, der am besten mit deren internen Details und dem Funktions- und/oder Informationsumfang vertraut ist, kann späteren Verwendern ein Diagnose-Szenario zur Verfügung stellen, mit dem sich ermitteln lässt, ob eine Funktionalität einer individuellen Automatisierungslösung auf Basis der jeweiligen technologischen Vorlage erwartungsgemäß reagiert. Das jeweilige Diagnose-Szenario kann dabei in textueller Form vorliegen, zum Beispiel "Taster A drücken und prüfen ob Aggregat A anläuft" oder auf das die jeweilige Vorlage verwendende Computerprogramm einwirken um bestimmte Zustände herbeizuführen, deren Resultate der Verwender dann überprüfen kann (zum Beispiel: "Bitte bestätigen, wenn die Drehrichtung des Antriebs A geprüft werden kann", wobei auf eine Benutzereingabe mittels des Diagnose-Szenarios eine Ansteuerung des jeweiligen Aggregats erfolgt und wobei der Benutzer ein erwartetes Resultat quittiert oder ohne ein solches Resultat eine entsprechende Eingabe macht; im Fall, dass das erwartete Resultat nicht eintritt" kann das Diagnose-Szenario weitergehende Hilfestellung bieten, zum Beispiel "Status des Digitalausgangs XY prüfen", oder dergleichen).

Der Begriff Diagnose-Szenario soll allgemein Zusatzinformation für Test-, Inbetriebnahme- und Simulationszwecke, etc. umfassen. Eine weitere Möglichkeit von auf diese Weise mit technologischen Vorlagen kombinierbaren Zusatzinformationen sind Zusatzinformationen zu Wirkbeziehungen zwischen zumindest zwei von der technologischen Vorlage umfassten Objekten, zum Beispiel Wirkbeziehungen zwischen unterschiedlichen Achsen einer Produktionsmaschine, wenn zu deren Repräsentation die technologische Vorlage jeweils ein Objekt umfasst. Ein weiteres Beispiel für Zusatzinformationen in technologischen Vorlagen sind Elemente und Bestandteile einer Mensch-Maschine-Schnittstelle (HMI), also HMI-Masken (zum Beispiel zur Parameter- oder sonstigen Werteeingabe), HMI-Darstellungen (zum Beispiel zur Darstellung der mit der technologischen Vorlage abgebildeten Einheit oder des mit der technologischen Vorlage abgebildeten Prozesses oder Teilprozesses) und/oder HMI-Sequenzen (zum Beispiel Bedienabläufe, die einen Übergang zwischen einer ersten HMI-Darstellung und einer zweiten HMI-Darstellung ermöglichen oder vorsehen).

Wenn durch die Entwicklungsumgebung eine Möglichkeit geschaffen wird, auf der Basis einer Mehrzahl instanziierter technologischer Vorlagen eine neue technologische Vorlage zu definieren, die später zur Wiederverwendung in der gleichen Automatisierungslösung oder in anderen Automatisierungslösungen zur Verfügung steht, kann eine Bibliothek von technologischen Vorlagen dynamisch erweitert werden. Beim Anlegen einer solchen neuen technologischen Vorlage werden die jeweils zugrunde liegenden Vorlagen und/oder die zugrunde liegenden Vorlagen mit den in den darauf basierenden Instanzen evtl. bereits ergänzten Informationen zusammengefasst, wobei für die neue technologische Vorlage Verschaltungen zwischen den davon umfassten technologischen Vorlagen erhalten bleiben. Wenn die sich auf diesem Wege ergebende technologische Vorlage auf Basis einer Kombination der Daten mehrerer jeweils zugrunde liegender bisheriger technologischer Vorlagen entsteht, handelt es sich bei der neuen technologischen Vorlage um eine entsprechend den integrierten technologischen Vorlagen hierarchische technologische Vorlage.

Die oben genannte Aufgabe wird auch mit einem Programmiergerät oder dergleichen zur Erstellung von als Automatisierungslösung fungierenden Computerprogrammen gelöst, das nach dem Verfahren wie hier und im Folgenden beschrieben arbeitet und dazu als Mittel zur Durchführung des Verfahrens insbesondere eine Verarbeitungseinheit nach Art eines Mikroprozessors und einen Speicher umfasst, wobei in den Speicher ein durch die Verarbeitungseinheit ausführbares Computerprogramm zur Implementierung des Verfahrens und/oder einzelner oder aller Ausgestaltungen ladbar oder geladen ist. Die Erfindung ist damit auch ein solches Computerprogramm mit durch einen Computer, insbesondere ein Programmiergerät, ausführbaren Programmcodeanweisungen und andererseits ein Speichermedium mit einem derartigen Computerprogramm sowie schließlich auch ein Computer oder Programmiergerät, in dessen Speicher als Mittel zur Durchführung des Verfahrens und seiner Ausgestaltungen ein solches Computerprogramm geladen oder ladbar ist.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Prüf- und Arbeitsverfahren betreffen.

Es zeigen
- FIG 1: einen technischen Prozess, für den mit einer Entwick-lungsumgebung eine Automatisierungslösung erstellt wird, die auch technologischen Vorlagen basiert und
- FIG 2: eine schematisch vereinfachte Darstellung einer tech-nologischen Vorlage.

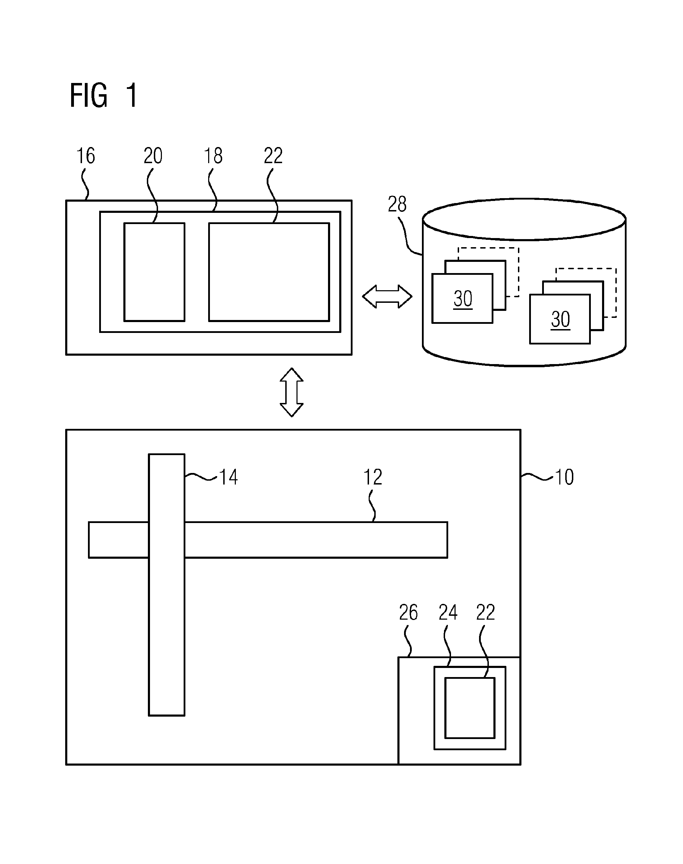

FIG 1 zeigt schematisch vereinfacht als Beispiel für einen zu steuernden und/oder zu überwachenden technischen Prozess 10 eine Produktionsmaschine mit einer ersten und einer zweiten Achse 12, 14. Zur Entwicklung einer Automatisierungslösung für den jeweiligen technischen Prozess 10 ist ein Programmiergerät 16 oder dergleichen vorgesehen. Dieses umfasst in an sich bekannter Art und Weise eine Verarbeitungseinheit nach Art eines Mikroprozessors und einen Speicher 18. In den Speicher 18 ist ein als Entwicklungsumgebung 20 fungierendes Computerprogramm geladen. Die Entwicklungsumgebung 20 ist zum Erstellen von als Automatisierungslösung fungierenden Computerprogrammen 22 bestimmt. Das oder jedes auf diese Weise erstellte Computerprogramm wird zu gegebener Zeit im technischen Prozess installiert, also zum Beispiel in einen Speicher 24 einer Steuerungseinheit 26 der Produktionsmaschine 10 geladen.

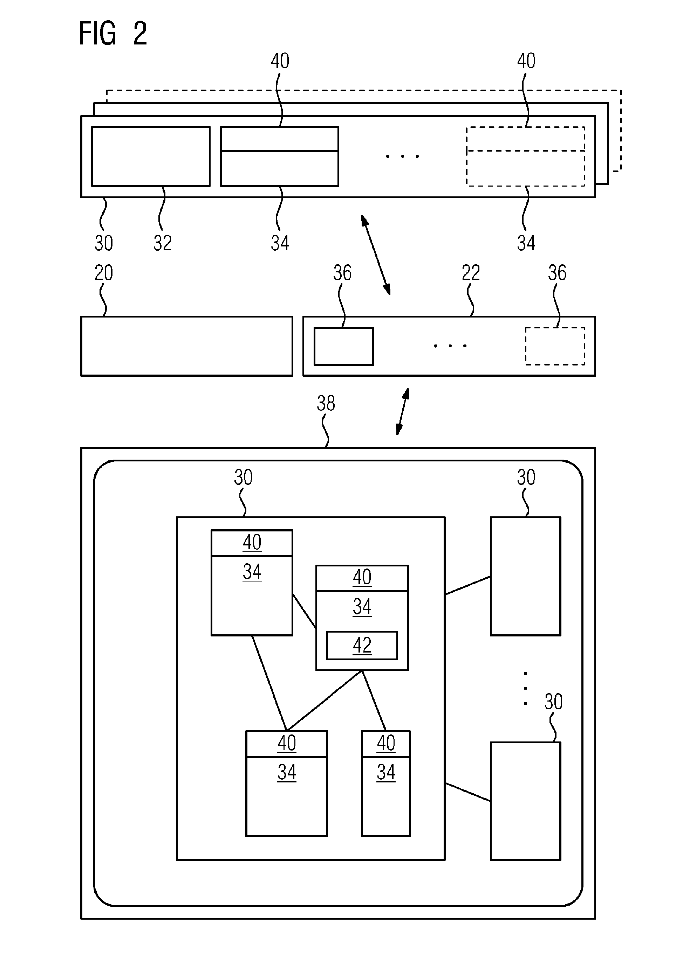

Bei dem hier vorgestellten Ansatz ist vorgesehen, dass die Entwicklungsumgebung 20 Zugriff auf zum Beispiel in einer als Bibliothek 28 organisierten Datenbank verfügbare technologische Vorlagen 30 hat. Die Verwendung der technologischen Vorlagen 30 ist zur erleichterten oder verbesserten Erstellung von als Automatisierungslösung fungierenden Computerprogrammen 22 vorgesehen. Die technologischen Vorlagen 30 werden im Folgenden anhand von FIG 2 weiter erläutert.

FIG 2 zeigt zunächst, dass eine technologische Vorlage 30 neben Programmcode 32 und/oder Konfigurations-/Projektierungsdaten zumindest auch jeweils zumindest ein Objekt 34 zur Repräsentation eines Aspekts des jeweiligen technischen Prozesses 10 aufweist, also zum Beispiel zur Repräsentation einer physikalischen Einheit des technischen Prozesses 10 (zum Beispiel eine Achse, ein Antrieb, usw.) oder zur Repräsentation solcher Aspekte wie Nocken, Masterwelle, und dergleichen oder zur Repräsentation des technischen Prozesses 10 selbst oder davon umfasster Teilprozesse.

Mittels der Entwicklungsumgebung 20 werden ein oder mehrere derartige technologische Vorlagen 30 in einem als Automatisierungslösung vorgesehenen Computerprogramm 22 verwendet, zum Beispiel indem auf deren Basis Instanzen 36 einzelner technologischer Vorlagen 30 Bestandteil des Computerprogramms 22 werden.

FIG 2 zeigt dazu im Weiteren, dass auf einem Monitor 38, der zum Programmiergerät 16 gehört oder auf den das Programmiergerät 16 Zugriff hat, eine graphische Darstellung entweder der technologischen Vorlagen 30 - zum Beispiel zur Auswahl - oder einer oder mehrerer Instanzen 36 einer technologischen Vorlage 30 - wenn diese bereits zur Verwendung im Computerprogramm 22 ausgewählt wurde(n) - erfolgt. Mittels der Entwicklungsumgebung 20 können dann weitere Details für die jeweilige Instanz 36 der technologischen Vorlage 30 festgelegt werden oder Verschaltungen solcher Instanzen 36 untereinander oder zwischen davon umfassten Objekten 34 erfolgen. Auf diese Wiese entsteht unter Verwendung technologischer Vorlagen 30 auf effizientem Wege ein Computerprogramm 22 oder eine Basis für ein Computerprogramm zur Steuerung und/oder Überwachung eines technischen Prozesses.

FIG 2 zeigt auch, dass für jedes Objekt 34 eine insbesondere typisierte Schnittstelle 40 vorgesehen ist, welche die Zugriffsmöglichkeiten auf das jeweilige Objekt 34 definiert. Schließlich zeigt FIG 2, dass zumindest einzelne Objekte 34 Zusatzinformationen 42 für einen Verwender des jeweiligen Objekts 34 oder der das jeweilige Objekt 34 umfassenden technologischen Vorlage 30 umfassen. Als Zusatzinformation 42 kommt zum Beispiel ein Diagnose-Szenario für das Objekt 34/die technologische Vorlage 30 oder ein Inbetriebnahme-Szenario für das Objekt 34/die technologische Vorlage 30 oder Ähnliches in Betracht.

Einzelne im Vordergrund stehende Aspekte der hier eingereichten Beschreibung lassen sich damit kurz wie folgt zusammenfassen: Durch die Ausweitung der Wiederverwendungseinheiten, nämlich insbesondere der technologischen Vorlagen 30 und der davon umfassten Objekte 34, auf die gesamte Erstellung einer Automatisierungslösung, insbesondere auf die gesamte antriebsnahe Automatisierung, wird der Wiederverwendungsgrad deutlich erhöht. Die Struktur der technologischen Vorlagen 30 kann durch den Entwerfer und/oder den Verwender beliebig bestimmt werden und zwar sowohl hinsichtlich der jeweiligen inhaltlichen Zusammensetzung (unterschiedliche Typen, zum Beispiel Programm einerseits und Repräsentant für einen Motor andererseits) als auch hinsichtlich einer jeweiligen Granularität (zum Beispiel Objekte als Repräsentanten für ein Zuführband als Maschinenmodul oder einen Umrichter als Teillösung für einen Wickler). Weitere Teilaspekte sind der Vorschlag einer typisierten antriebsnahen Automatisierungsschnittstelle, die Möglichkeit, technologische Vorlagen 30 mit und ohne Gerätebindung zu erzeugen sowie die Unterstützung von Late Binding. Hierdurch wird speziell die Bildung von Maschinenvarianten zum Engineering- oder Maschinenkonfigurationszeitpunkt oder während des Maschinenbetriebs unterstützt. Durch den hier beschriebenen Ansatz werden die Gleichteile der antriebsnahen Automatisierung erhöht, indem auch Software stärker als bisher als Gleichteil, nämlich auf Basis einer technologischen Vorlage 30, wieder verwendbar ist. Dies reduziert Kosten über den jeweiligen Lebenszyklus der Automatisierungslösung, indem eine Fehlerquote reduziert wird, der Aufwand für Tests, Wartung, Dokumentation sowie Inbetriebnahme und dergleichen sinkt, indem Doppelentwicklungen vermieden werden und indem der Projektierungsaufwand reduziert wird. Diese Verbesserungen führen zu Zeit- und Kostenersparnis und erhöhen die Investitionssicherheit.

## Patentansprüche

1. Verfahren zum Erstellen von als Automatisierungslösung fungierenden Computerprogrammen (22) unter Verwendung technologischer Vorlagen (30), mit einer in Software implementierten Entwicklungsumgebung (20),
wobei die technologischen Vorlagen (30) neben Programmcode (32) und/oder Konfigurations-/Projektierungsdaten zumindest auch jeweils zumindest ein Objekt (34) zur Repräsentation physikalischer Einheiten eines technischen Prozesses (10) oder zur Repräsentation des technischen Prozesses (10) oder davon umfasster Teilprozesse aufweisen.

2. Verfahren nach Anspruch 1, wobei in einer technologischen Vorlage (30) einem Objekt (34) eine Schnittstelle (40) zugeordnet ist.

3. Verfahren nach Anspruch 2, wobei die Schnittstelle (40) typisiert ist.

4. Verfahren nach einem der vorangehenden Ansprüche, wobei die technologischen Vorlagen (30) Bezeichner für eine späte Bindung erst zu einem Laufzeit-Zeitpunkt umfassen.

5. Verfahren nach einem der vorangehenden Ansprüche, wobei eine technologische Vorlage (30) Zusatzinformationen (42) für einen Verwender der Vorlage umfasst.

6. Verfahren nach Anspruch 5, wobei eine technologische Vorlage (30) als Zusatzinformation (42) ein Diagnose-Szenario umfasst.

7. Verfahren nach Anspruch 5 oder 6, wobei eine technologische Vorlage (30) als Zusatzinformation (42) ein Inbetriebnahme-Szenario umfasst.

8. Verfahren nach einem der vorangehenden Ansprüche, wobei eine Mehrzahl instanziierter technologischer Vorlagen (30) zu einer neuen, hierarchischen technologischen Vorlage (30) zusammengefasst wird und wobei für die neue technologische Vorlage (30) Verschaltungen zwischen den davon umfassten technologischen Vorlagen (30) erhalten bleiben.

9. Computerprogramm mit Programmcode-Mitteln, um alle Schritte von jedem beliebigen der Ansprüche 1 bis 8 durchzuführen, wenn das Computerprogramm auf einem Programmiergerät zur Erstellung von als Automatisierungslösung fungierenden Computerprogrammen (22) ausgeführt wird.

10. Programmiergerät zur Erstellung von als Automatisierungslösung fungierenden Computerprogrammen (22), mit einem Speicher und einer Verarbeitungseinheit nach Art eines Mikroprozessors, wobei in den Speicher ein durch die Verarbeitungseinheit ausführbares Computerprogramm nach Anspruch 9 geladen ist.

11. Digitales Speichermedium mit elektronisch auslesbaren Steuersignalen, die so mit einer Verarbeitungseinheit eines Programmiergeräts nach Anspruch 10 zusammenwirken können, dass ein Verfahren nach einem der Ansprüche 1 bis 8 ausgeführt wird.

## Geänderte Patentansprüche

### Geänderte Patentansprüche gemäss Regel 137(2) EPÜ.

**1.** Verfahren zum Erstellen von als Automatisierungslösung fungierenden Computerprogrammen (22) zur Steuerung und/oder Überwachung eines technischen Prozesses unter Verwendung technologischer Vorlagen (30), mit einer in Software implementierten Entwicklungsumgebung (20),
wobei die technologischen Vorlagen (30) neben Programmcode (32) und/oder Konfigurations-/Projektierungsdaten zumindest auch jeweils zumindest ein Objekt (34) zur Repräsentation physikalischer Einheiten eines technischen Prozesses (10) oder zur Repräsentation des technischen Prozesses (10) oder davon umfasster Teilprozesse aufweisen,
**dadurch gekennzeichnet, dass**
eine technologische Vorlage (30) Zusatzinformationen (42) und als Zusatzinformation (42) ein Diagnose-Szenario oder Inbetriebnahme-Szenario umfasst, mit dem sich ermitteln lässt, ob eine Funktionalität einer individuellen Automatisierungslösung auf Basis der jeweiligen technologischen Vorlage (30) erwartungsgemäß reagiert.

**2.** Verfahren nach Anspruch 1, wobei in einer technologischen Vorlage (30) einem Objekt (34) eine Schnittstelle (40) zugeordnet ist.

**3.** Verfahren nach Anspruch 2, wobei die Schnittstelle (40) typisiert ist.

**4.** Verfahren nach einem der vorangehenden Ansprüche, wobei die technologischen Vorlagen (30) Bezeichner für eine späte Bindung erst zu einem Laufzeit-Zeitpunkt umfassen.

**5.** Verfahren nach einem der vorangehenden Ansprüche, wobei eine Mehrzahl instanziierter technologischer Vorlagen (30) zu einer neuen, hierarchischen technologischen Vorlage (30) zusammengefasst wird und wobei für die neue technologische Vorlage (30) Verschaltungen zwischen den davon umfassten technologischen Vorlagen (30) erhalten bleiben.

**6.** Computerprogramm mit Programmcode-Mitteln, um alle Schritte von jedem beliebigen der Ansprüche 1 bis 4 durchzuführen, wenn das Computerprogramm auf einem Programmiergerät zur Erstellung von als Automatisierungslösung fungierenden Computerprogrammen (22) ausgeführt wird.

**7.** Programmiergerät zur Erstellung von als Automatisierungslösung fungierenden Computerprogrammen (22), mit einem Speicher und einer Verarbeitungseinheit nach Art eines Mikroprozessors, wobei in den Speicher ein durch die Verarbeitungseinheit ausführbares Computerprogramm nach Anspruch 6 geladen ist.

**8.** Digitales Speichermedium mit elektronisch auslesbaren Steuersignalen, die so mit einer Verarbeitungseinheit eines Programmiergeräts nach Anspruch 7 zusammenwirken können, dass ein Verfahren nach einem der Ansprüche 1 bis 5 ausgeführt wird.
